# Europäisches Patentamt
## European Patent Office
## Office européen des brevets

(19)

(11) Publication number: **0 010 696**
**B1**

(12)

# EUROPEAN PATENT SPECIFICATION

(45) Date of publication of patent specification: **30.03.83**

(51) Int. Cl.³: **F 16 F 15/22, F 16 F 15/04**

(21) Application number: **79104027.2**

(22) Date of filing: **18.10.79**

(54) **A driving system for driving a machine element in a repeated reciprocating movement along a linear path.**

(30) Priority: **25.10.78 SE 7811076**

(43) Date of publication of application:
**14.05.80 Bulletin 80/10**

(45) Publication of the grant of the patent:
**30.03.83 Bulletin 83/13**

(84) Designated Contracting States:
**BE CH DE FR GB IT NL**

(56) References cited:
**DE - A - 1 775 170**
**DE - A - 1 953 362**
**FR - A - 840 221**
**FR - A - 1 240 236**
**FR - A - 1 433 867**
**FR - A - 2 261 449**
**GB - A - 1 275 827**
**US - A - 4 033 566**
**US - A 4 058 301**

(73) Proprietor: **TETRA PAK INTERNATIONAL AB**
**Fack 1701**
**S-221 01 Lund 1 (SE)**

(72) Inventor: **Pär, Magnus Andersson**
**Domarevägen 17**
**S-230 50 Bjärred (SE)**

(74) Representative: **Müller, Hans-Jürgen, Dipl.-Ing.**
**et al,**
**Müller, Schupfner & Gauger Lucile-Grahn-Strasse**
**38 Postfach 80 13 69**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## A driving system for driving a machine element in a repeated reciprocating movement along a linear path

This invention relates to a driving system for driving a machine element in a repeated reciprocating movement along a linear path having a vertical component of movement between an upper and a lower turning point and comprising a motor-driven cam disc and cam follower arrangement connected via a pivotally supported lever rod to the machine element and means for compensating the inertia forces that particularly occur during each acceleration and deceleration of the machine element when it is moved from the lower to the upper turning point.

When a machine element is being driven in a repeated reciprocating movement along a linear path having a vertical component of movement there will occur particularly during its movement from the lower to the upper turning point inertia forces since the machine element when reaching the lower turning point receives a zero speed from which it then must first be accelerated to a maximum speed which may be reached at a position which substantially corresponds to half of its working stroke and as soon as this maximum speed is reached the machine element must then again be decelerated to a zero speed which is reached at the upper turning point. During the subsequent downward movement of the machine element such an acceleration and deceleration is substantially not existent so that a rather constant speed is obtainable. When the machine element has a large weight it will be necessary to supply respectively great driving forces especially when at the same time a relatively short cycle time for such a reciprocating movement is desirable which means that in this case the particular driving pattern will result in substantial vibrations and shocks on the supporting structure for the machine element. For avoiding or at least substantially reducing such vibrations and shocks on the supporting structure deriving particularly from the inertia forces that occur during each acceleration and deceleration of the machine element when it is moved from the lower to the upper turning point the driving system for driving the machine element must also comprise means for compensating these inertia forces and for obtaining a uniform movement of the machine element in either direction of its path.

It already has been suggested to provide as a proper compensating means a single piston and cylinder unit of the single acting type in which the chamber on the piston rod side is freely connected to the surrounding atmosphere and the working chamber is enlarged by an interconnected air tank for maintaining a substantially constant pressure within this working chamber that irrespectively of the position of the piston in the cylinder provides a substantially constant upwardly directed force on the machine element. Since under the influence of such inertia forces the weight of the machine element repeatedly varies it is necessary for such a single piston and cylinder unit that the pressure within the working chamber is calculated for the desired maximum force at a certain instant during the working cycle of the machine element which means that the piston and cylinder unit provides over all of the remaining working cycle an excessively large force causing a varying stress on the driving system.

It is accordingly an object of the present invention to provide a driving system of the kind referred in which the compensating means are designed such that a uniform movement of the machine element without the occurrence of vibrations and shocks on the supporting structure is obtained.

In accordance with the invention this object is being achieved by providing a compensating means that comprises a first and a second pneumatic piston and cylinder unit is connected to the machine element and the piston rod of the second piston and cylinder unit is connected to the supporting structure for the machine element, the working chamber of the first piston and cylinder unit being enlarged by an interconnected air tank for maintaining a substantially constant pressure within the working chamber that balances the weight of the machine element and that is slightly less than the pressure within the closed working chamber opposite the piston rod of the second piston and cylinder unit when the machine element is in its uppermost position.

It is known from the FR—A—1 433 867 and from the US—A—4 058 301 to design pneumatic shock absorbers as two serially arranged piston and cylinder units to produce or resist compressive or tensile forces acting on the supporting piston rods as a result of a uniaxial double-acting load. Such pneumatic shock absorbers allow the absortion of static, dynamic and shock loads in excess of a design maximum that may occur in a linear push-pull coupling which per se cannot be compared with a machine element as driven by an external driving force for securing a reciprocating movement along a linear path having a vertical component of movement between an upper and a lower turning point.

With the inventive driving system the two serially arranged piston and cylinder units not only act as a means for compensating the inertia forces that particularly occur during each acceleration and deceleration of the machine element when it is moved from the lower to the upper turning point but also act as an additional driving means as entirely integrated in the driving system whereby the driving forces for driving the machine element may be chosen such with the pressure that is maintained within the two working chambers that the driving force as derived from the motor driving the cam disc now more or less simply acts as a steering force for steering the repeated reciprocation of the machine element at the upper and lower turning points. It is mainly for this reason that any vibration and shocks on the supporting structure for the machine element are avoided and a uniform movement of the machine element at a constant speed is obtained.

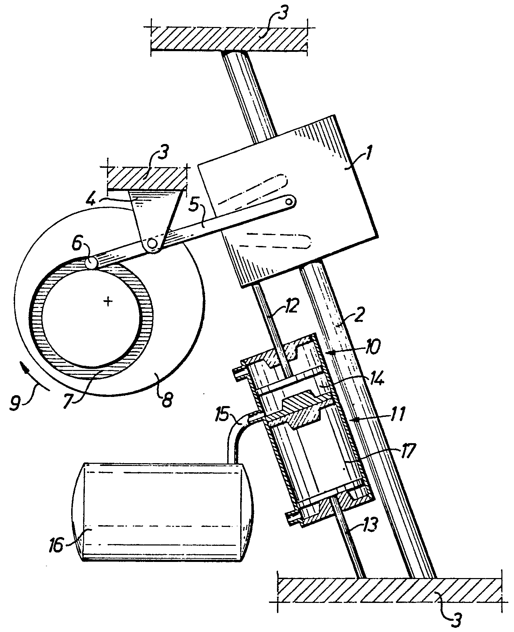

Other objects, advantages and novel features of the invention will become apparent from the following detailed description of the invention when considered in conjunction with the accompanying drawing showing schematically a preferred embodiment of the driving system.

Referring to the drawing there is schematically shown a machine element 1 to which can be imparted a reciprocating movement along a guide bar 2. The two ends of the guide bar 2 are firmly connected to a supporting structure 3 which via a bracket 4 also pivotally supports a lever rod 5 being connected at its one arm with the machine element 1 and supporting at its other arm a cam follower 6 which runs in a groove 7 on a motor-driven cam disc 8 that rotates in the direction of the arrow 9. The lower end of the machine element 1 is connected to the supporting structure 3 via compensating means comprising a first and a second pneumatic piston and cylinder unit 10 and 11. These two piston and cylinder units are arranged in series such that the piston rod 12 of the first piston and cylinder unit 10 is connected to the machine element 1 and the piston rod 13 of the second piston and cylinder unit 11 is connected to the supporting structure 3. The two piston and cylinder units 10 and 11 are of the single acting type in that the chambers on the respective piston rod sides are freely connected to the surrounding atmosphere. The working chamber 14 of the first piston and cylinder unit 10 is enlarged by an air tank 16 connected to the working chamber 14 via a flexible tube 15 for maintaining a substantially constant pressure within this working chamber that balances the weight of the machine element and that is slightly less than the pressure within the closed working chamber 17 opposite the piston rod 13 of the second piston and cylinder unit 11 when the machine element 1 is in its uppermost position.

For calculating the correct pressures that are to be maintained within the working chambers 14 and 17 of the two piston and cylinder units 10 and 11 the weight of the machine element 1 is first considered and then the volume of air enclosed in the working chamber 14 and the air tank 16 is given an excess pressure which, when acting upon the piston of the first piston and cylinder unit 10, produces an upwardly directed force balancing the weight of the machine element 1. Owing to the large volume of the air tank 16 in relation to the volume of the working chamber 14, the pressure within the working chamber 14 will be substantially constant irrespective of the position of the piston. The pressure in the working chamber 17 of the second piston and cylinder unit 11 is then chosen such that it slightly exceeds the pressure in the working chamber 14 when the machine element 1 is in its uppermost position. When accordingly the machine element 1 is driven for a repeated reciprocating movement along the guide bar 2 through the motor-driven cam disc 8 and cam follower 6, 7 and via the pivotally supported lever rod 5 the downward movement of the machine element 1 beginning at the upper turning point will be first transmitted via the piston rod 12 to the piston of the first piston and cylinder unit 10. During this downward movement of the piston the pressure present within the working chamber 14 acts with an upwardly directed substantially constant force on the machine element 1 so that its weight will be substantially neutralized. This upwardly directed force remains substantially constant until the piston of the first piston and cylinder unit 10 comes into contact with the bottom wall of the working chamber 14 which is provided at a position which substantially corresponds to half of the working stroke of the machine element 1. Since the pressure in the working chamber 17 of the second piston and cylinder unit 11 slightly exceeds the pressure in the working chamber 14, the second piston and cylinder unit 11 will only then be activated and will accordingly be moved downwardly in unison with the first piston and cylinder unit 10 whereby the piston rod 13 will be moved into the cylinder of the second piston and cylinder unit 11 so that the volume of the working chamber 17 diminishes and therefore the pressure in this working chamber increases. An upwardly directed increased force is therefore successively produced which is used for decelerating the movement of the machine element 1. When the machine element 1 has come to a zero speed at the lower turning point and is successively moved upwardly then the pressure within the working chamber 17 which previously has been increased owing to the compression of the air will impart to the machine element 1 a return acceleration which substantially corresponds to the acceleration caused by the shape of the cam disc 8. After half of the working stroke the piston in the second piston and cylinder unit 11 reaches its lower position, shown in the drawing, and the acceleration of the second piston and cylinder unit 11 ceases. During the continued upward movement of the machine element 1 a deceleration with the help of the cam disc 8 takes place at the same time as the first piston and cylinder unit 10 again acts for balancing the weight of the machine element 1 until the same has reached the upper turning point.

In accordance with a modified embodiment the chamber on the piston rod side of the second piston and cylinder unit 11 may be closed and will then act as a spring which endeavours to move the machine element 1 from the upper turning point, the combined effect urging the machine element in the direction towards a substantially central position between the upper and the lower turning point. The second piston and cylinder unit 11 will therefore also contribute to the deceleration when the machine element 1 during the return stroke has passed the midpoint of the working stroke and successively approaches the upper turning point, at the same time as the stored energy, after the turning in the upper turning point, accelerates the machine element in the downward direction. When the downward motion of the machine element shall occur at a uniform, constant speed it may be appropriate, however, to reduce this accelerating force which may be achieved e.g. by means of a valve which directly after the machine element has passed the upper turning point reduces the excess pressure in the working chamber on the piston rod side of the cylinder.

The driving force necessary for driving the machine element 1 along the guide bar 2 is practically only needed for steering the repeated reciprocating movement since the main driving force is contributed by the two piston and cylinder units 10 and 11. Since friction losses as well as certain inaccuracies of construction cannot be avoided, a continuous additional contribution of force through the motor-driven cam disc and cam follower arrangement is however required although this additional force is very restricted when the shape of the curve which the cam disc and cam follower arrangement follows is chosen such that the natural movement of the machine element induced by the two piston and cylinder units is affected as little as possible. Since the driving system accordingly reduces all inherent forces and stresses its individual elements can be dimensioned smaller which results in an appreciable saving. A particularly uniform and vibrationless driving mode is finally made possible when the machine element during its whole working stroke stresses the pivotally supported lever rod only in one direction since such a monodirectional stress which may be particularly achieved by the beforementioned modified embodiment does not cause the occurrence of oscillations and shocks due to eventual inaccuracies and play of the individual components of the driving system.

## Claims

1. A driving system for driving a machine element (1) in a repeated reciprocating movement along a linear path having a vertical component of movement between an upper and a lower turning point and comprising a motor-driven cam disc (8) and cam follower (6, 7) arrangement connected via a pivotally supported lever rod (5) to the machine element (1) and means for compensating the inertia forces that particularly occur during each acceleration and deceleration of the machine element when it is moved from the lower to the upper turning point, characterized in that said compensating means comprises a first and a second pneumatic piston and cylinder unit (10 and 11) arranged in series such that the piston rod (12) of the first piston and cylinder unit (10) is connected to the machine element (1) and the piston rod (13) of the second piston and cylinder unit (11) is connected to the supporting structure (3) for the machine element (1), the working chamber (14) of the first piston and cylinder unit (10) being enlarged by an interconnected air tank (16) for maintaining a substantially constant pressure within the working chamber that balances the weight of the machine element (1) and that is slightly less than the pressure within the closed working chamber (17) opposite the piston rod (13) of the second piston and cylinder unit (11) when the machine element (1) is in its uppermost position.

2. A driving system in accordance with claim 1, characterized in that at least the first piston and cylinder unit (10) is of the single acting type and the chamber on the piston rod side is freely connected to the surrounding atmosphere.

3. A driving system in accordance with claim 1 or 2, characterized in that the working chamber (14) of the first piston and cylinder unit (10) is provided with a bottom wall acting as a stop for the piston at a position which substantially corresponds to half of the working stroke of the machine element (1).

## Revendications

1. Système d'entraînement pour entraîner en élément de machine (1) en un mouvement répété de va-et-vient sur un parcours rectiligne ayant une composante de mouvement verticale entre un point haut extrême et un point bas extrême et comprenant un dispositif de disque à came (8) entraîné par moteur et de galet de came (6, 7) associé à l'élément de machine (1) par un levier (5) articulé sur un support et un moyen pour compenser les forces d'inertie qui se présentent en particulier pendant chaque accélération et chaque décélération de l'élément de machine quand cet élément est déplacé du point extrême inférieur au point extrême supérieur, caractérisé en ce que ledit moyen compensateur comprend un premier ensemble pneumatique à piston et à cylindre (10) et un second (11) disposés en série de telle façon qui la tige de piston (12) du premier ensemble à piston et à cylindre (10) soit raccordé à l'élément de machine (1) et que la tige de piston (13) du second ensemble à piston et cylindre (11) soit raccordée à la structure porteuse (3) pour lélément de machine (1), la chambre de travail (14) du premier ensemble à piston et cylindre (10) étant agrandie par le raccordement d'un réservoir d'air (16) pour maintenir à l'intérieur de la chambre de travail une pression sensiblement constante qui équilibre le poids de l'élément de machine (1) et qui est légèrement moindre qui la pression à l'intéreiur de la chambre de travail fermée (17) opposée à la tige de piston (13) du second ensemble à piston et cylindre (11) quand l'élément de machine (1) est dans sa position la plus haute.

2. Système d'entraînement selon la revendication 1, caractérisé en ce qu'au moins le premier ensemble à piston et cylindre (10) est du type à simple effet et que la chambre du côté de la tige de piston est librement raccordée à l'atmosphère ambiante.

3. Système d'entraînement selon la revendication 1 ou la revendication 2, caractérisé en ce que la chambre de travail (14) du premier ensemble à cylindre et piston (10) est munie d'un fond agissant comme butée pour le piston à une position qui correspond pratiquement à la moitié de la course de travail de l'élément de machine.

### Patentansprüche

1. Antriebssystem zum Antrieb eines Maschinenelements (1) zu einer sich wiederholenden hin- und hergehenden Bewegung längs einer linearen Bahn, die eine vertikale Bewegungskomponente zwischen einem oberen und einem unteren Wende- bzw. Umkehrpunkt aufweist, mit einer von einem Motor angetriebenen Nockenscheibe (8) und mit einer Nockenfolgeanordnung (6, 7), die mittels einer schwenkbar gelagerten Hebelstange (5) mit dem Maschinenelement (1) verbunden ist, und mit einer Kompensationseinrichtung zum Kompensieren von Trägheitskräften, die insb. während jeder Beschleunigung und Abbremsung des Maschinenelements auftreten, wenn sich dieses vom unteren zum oberen Wende- bzw. Umkehrpunkt bewegt, dadurch gekennzeichnet, daß die Kompensationseinrichtung ein erstes und ein zweites pneumatisches Kolben-Zylinder-Aggregat (10, 11) aufweist, die derart in Reihe geschaltet bzw. angeordnet sind, daß die Kolbenstange (12) des ersten Aggregats (10) mit dem Maschinenelement (1), und die Kolbenstange (13) des zweiten Aggregats (11) mit der Basis (3) bzw. Stützvorrichtung für das Maschinenelement (1) verbunden sind, und daß die Arbeitskammer (14) des ersten Aggregats (10) zum Beibehalten eines im wesentlichen konstanten Druckes in der Arbeitskammer um einen zwischengeschalteten Lufttank (16) vergrößert ist, wobei, der Druck das Gewicht des Maschinenelements (1) ausgleicht und in der obersten (höchsten) Stellung des Maschinenelements (1) etwas geringer ist als der Druck in der der Kolbenstange (13) des zweiten Aggregats (11) gegenüberliegenden geschlossenen Arbeitskammer (17).

2. Antriebssystem nach Anspruch 1 dadurch gekennzeichnet, daß mindestens für das erste Kolben-Zylinder-Aggregat (10) ein solches vom einfach wirkenden Typus verwendet und die Kammer auf der Kolbenstangenseite frei mit der umgebenden Atmosphäre verbunden ist.

3. Antriebssystem nach Anspruch 1 oder 2, dadurch gekennzeichnet, daß die Arbeitskammer (14) des ersten Kolben-Zylinder-Aggregats (10) mit einer Bodenwand versehen ist, die in einer Stellung, die im wesentlichen dem halben Arbeitshub des Maschinenelement (1) entspricht, als Anschlag für den Kolben dient.